# EUROPEAN PATENT SPECIFICATION

(11) **EP 3 106 014 B1**
(45) Date of publication and mention of the grant of the patent: **09.05.2018**
(21) Application number: 16175030.2
(22) Date of filing: 17.06.2016
(51) Int. Cl.: A01D 34/66, A01D 34/68, A01D 34/76, A01D 34/64

(54) **LIFT APPARATUS OF A LAWN MOWER CUTTING DECK**
HEBEVORRICHTUNG EINES RASENMAEHERS
APPAREIL DE LEVAGE D'UNE TONDEUSE DE COUPE

(30) Priority: 19.06.2015 IT UB20151539
(43) Date of publication of application: 21.12.2016
(73) Proprietor: Stiga S.p.A. in breve anche St. S.p.A., 31033 Castelfranco Veneto (TV) (IT)
(72) Inventor: SUSIN, Eddi, 31050 VEDELAGO (TV) (IT); SOLIGO, Andrea, 31033 SAN FLORIANO DI CASTELFRANCO VENETO (TV) (IT); DOVERI, Marco, 56030 TERRICCIOLA (PI) (IT); TOGNETTI, Francesco, 56010 SAN GIULIANO TERME (PI) (IT)
(74) Representative: Mittler, Andrea

(56) References cited:
- EP-A1- 0 213 096
- WO-A1-2013/135267
- US-A- 4 914 898
- US-A- 5 029 437
- US-A1- 2005 016 143

## Description

The present invention relates to a lift apparatus for a cutting deck of a lawn mower.

In the prior art, EP-1759569-A1 describes a lawn mower comprising a frame, a cutting deck and at least one lift apparatus arranged on one side of the lawn mower and which links the cutting deck with the frame. Said lift apparatus comprises a first arm, said first arm comprises a first end portion which is pivoted to said frame by means of a third pivot. Said first arm is integral with a first pivot which pivots said cutting deck. Said first pivot of the lift apparatus is integral with the cutting deck. Said lift apparatus passes said cutting deck from a lower position for cutting grass to at least one position raised off the ground. Said first arm comprises a prolongation. Said prolongation of the first arm integrally mounts a third arm of the lift apparatus. Said third arm comprises a second portion which extends over a distance in the same direction as the first arm along the first axis, and a first portion which integrally links the third arm with the first arm. Said second portion of the third arm integrally mounts said first pivot, said second portion of said third arm is pivoted with said cutting deck. Said second portion of the third arm is parallel to the first axis. Said frame comprises a lower portion which identifies a second axis, said lower portion of the frame along the second axis is inclined by a second angle with respect to the ground. Said cutting deck comprises a front portion, a rear portion and a center of mass between the front portion and the rear portion, said cutting deck mounts at least one support arm of the lift apparatus, said at least one support arm comprises a front end portion linked to the front portion of the cutting deck by means of a joint, a rear end portion comprising a second portion pivoted with said first pivot. Said lift apparatus is adapted to pass the cutting deck from the lower position for cutting grass, in which a lower base of the cutting deck faces the ground with a longitudinal axis and the first axis which are parallel to the ground, to a first position raised off the ground of said at least one position raised off the ground, with the longitudinal axis parallel to the first axis and both axes raised off the ground by the second angle, up to a second position raised off the ground of said at least one position raised off the ground, a lower base of the cutting deck faces the front direction of the lawn mower in said position raised off the ground, with the longitudinal axis inclined by a first angle with respect to the first axis. The longitudinal axis is parallel to a geometric plane which outlines the lower base of the cutting deck. Said cutting deck is mounted in front of the frame. The lawn mower comprises two lift apparatuses with two first arms which are pivoted, by means of two third pivots, to a front axis of two front wheels which are rotatably mounted with the frame. The lift apparatus comprises a safety device which is adapted to be engaged with the lift arm in order to keep the cutting deck stopped when the cutting deck passes from the operating position to the first position raised off the ground. In order to pass the cutting deck from the first position raised off the ground to the second position raised off the ground, there is a need to release the safety device to release the lift arm from the cutting deck.

US-2005/016143-A1 describes a lift apparatus for a cutting deck of a lawn mower in which there is a need to disassemble a linking belt between a drive pulley and a driven pulley when the cutting deck is raised off the ground.

EP-0213096-A1 describes a lawn mower comprising a steering device which keeps a driving belt connected between two pulleys and does not provide for the cutting deck to be raised off the ground for the maintenance of the blades.

US-5029437-A describes a lawn mower comprising a lift apparatus for the cutting deck for cutting the grass at a different height and for avoiding obstacles, and it does not provide for the cutting deck to be raised off the ground for the maintenance of the blades.

US-4914898-A describes a lift apparatus for a cutting deck in which there is a need to disassemble a linking belt between the pulleys when the deck is raised by an angle greater than 9° off the ground, whereby it may not be possible to cause the cutting deck to be raised off the ground enough for the maintenance of the blades.

Before passing the cutting deck from the lower position to any one of the positions raised off ground, there disadvantageously is a need to detach the belt from a drive pulley or from a driven pulley, otherwise the belt does not allow the raising, since the belt is not extendible.

It is the object of the present invention to make a lift apparatus for a cutting deck of a lawn mower which is safe, easy to construct, is not complex, lasts more over time, which allows a raised position of the cutting deck to be kept safely over time, which lift apparatus may be lightweight, which loading forces of the cutting deck are not discharged onto particularly fragile points of the pivot, which driving belts do not require detaching between a motor and pulleys of the cutting deck when the cutting deck of the lawn mower is raised completely off the ground for the maintenance of the cutting blades of the cutting deck.

In accordance with the invention, such an object is achieved by a lawn mower according to claim 1.

These and other features of the present invention will become more apparent from the following detailed description of a practical embodiment thereof, shown by way of non-limitative example in the accompanying drawings, in which:
Figure 1 shows a side plan view of a lawn mower comprising a lift apparatus for a cutting deck in a lower position for cutting grass;
Figure 2 shows an enlargement A of Figure 1, with the cutting deck of the lawn mower in the lower position;
Figure 3 shows the enlargement A with the cutting deck of the lawn mower in a first position raised off the ground;
Figure 4 shows the enlargement A with the cutting deck of the lawn mower in a second position raised off the ground for the maintenance of the blades of the cutting deck;
Figure 5 shows a front view of the lawn mower comprising the cutting deck in the first raised position;
Figure 6 shows a sectional view according to line VI-Vi in Figure 5, in which there is shown a portion of a frame of the lawn mower comprising a mechanism for lifting the cutting deck from a lower position to a raised position;
Figure 7 shows a side view of the lift apparatus;
Figure 8 shows a top view of the lift apparatus;
Figure 9 shows a top plan view of the lift apparatus mounted with the cutting deck of the lawn mower;
Figure 10 shows an enlargement B of a sectional view according to line X-X in Figure 5, of a belt and pulleys with the cutting deck of the lawn mower in the lower position;
Figure 11 shows the enlargement B of the sectional view according to line X-X in Figure 5, of the belt and the pulleys with the cutting deck of the lawn mower in the first position raised off the ground;
Figure 12 shows the enlargement B of the sectional view according to line X-X in Figure 5, of the belt and the pulleys with the cutting deck of the lawn mower in the second position raised off the ground;
Figure 13 shows a side plan view of a front portion of an alternative lawn mower comprising an alternative cutting deck in a lower position;
Figure 14 shows a top plan view of the lawn mower in Figure 13;
Figure 15 shows a sectional view according to the line XV-XV in Figure 14;
Figure 16 shows a side plan view of the lawn mower in Figure 13, with the cutting deck of the lawn mower in a first position raised off the ground;
Figure 17 shows a side plan view of the lawn mower in Figure 13, with the cutting deck of the lawn mower in a second position raised off the ground for the maintenance of the cutting blades of the cutting deck;
Figure 18 shows a sectional view according to line XVIII-XVIII in Figure 14;
Figure 19 shows a side plan view of a lawn mower comprising a lift apparatus for a cutting deck in a lower position for cutting grass, comprising a further bond of the first arm for fixing the second position raised off the ground;
Figure 20 shows the lawn mower in Figure 19 with the cutting deck of the lawn mower in the second position raised off the ground for the maintenance of the blades of the cutting deck;
Figure 21 shows a side view of a detail of the support arm and of the first arm with a block lever comprising a block pin in a blocked position between the first arm and the support arm;
Figure 22 shows a sectional view according to line XXII-XXII in Figure 21;
Figure 23 shows the side view in Figure 21, with the block pin in a released position to contain the mutual movement of the support arm with respect to the first arm;
Figure 24 shows a sectional view according to line XXXIV-XXXIV in Figure 23.

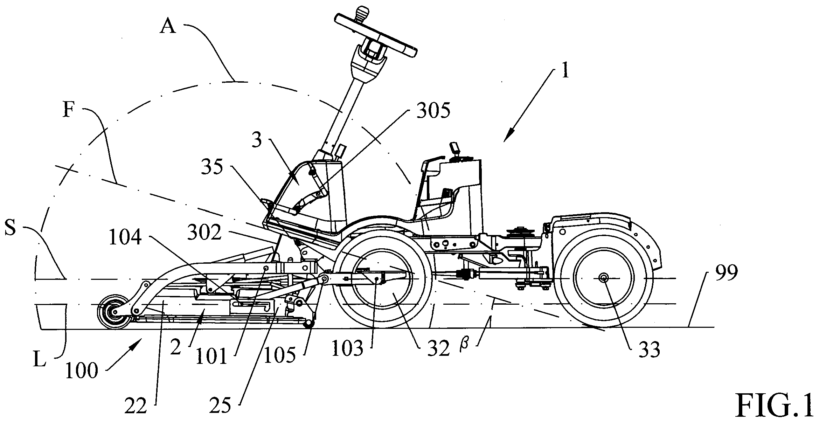

With reference to the drawings listed above and in particular to Figure 1, a lawn mower 1 is denoted comprising a frame 3, a cutting deck 2 and two lift apparatuses 100, one for each side of the lawn mower 1. Said lift apparatus 100 links the cutting deck 2 with the frame 3.

Said cutting deck 2 is mounted in front of frame 3. Said cutting deck 2 comprises a front portion 22, a rear portion 25 and a center of mass 21 between the front portion 22 and the rear portion 25.

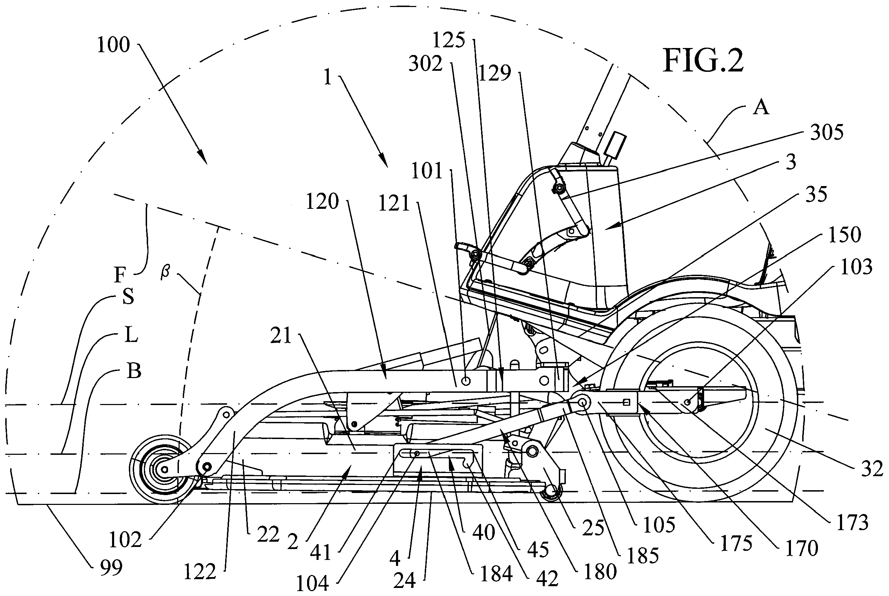

As shown in particular in Figures 2 to 4, 7 to 8, two lift apparatuses 100 each comprise a first arm 170. The two first arms 170 are pivoted, by means of two third pivots 103, to a front axis T of two front wheels 32 which are rotatably mounted with frame 3. Two other rear wheels 33 are rotatably mounted with a rear portion of frame 3.

As shown in particular in Figures 2 to 4, 7 to 8, said first arm 170 extends along a first axis S and comprises a first end portion 173 which is pivoted to said frame 3 by means of a third pivot 103. Said third pivot 103 identifies the front axis of rotation T of the first arm 170. Said first arm 170 integrally mounts a third arm 150 which in turn mounts a coupling point of a first pivot 101 which pivots said cutting deck 2.

Said first pivot 101 of the lift apparatus 100 is integral with the cutting deck 2. Said third arm 150 is integrally mounted with the first arm 170 and is pivoted with the cutting deck 2 by means of the first pivot 101. Said first pivot 101 identifies a first axis of pivot R about which the cutting deck 2 rotates, which cutting deck is pivoted with the third arm 150, which is a prolongation of the first arm 170. When the first arm 170 rotates about the front axis T, it raises the third arm 150 and it raises the first pivot 101, lifting in turn the cutting deck 2 from a lower position for cutting grass in which a lower base 24 of the cutting deck 2 faces ground 99 to a first position raised off ground 99. Thereby, said lift apparatus 100 passes said cutting deck 2 from the lower position to the first position raised off ground 99.

Said lift apparatus 100 comprises a second arm 180 comprising a first end portion 185 pivoted with a fifth pivot 105 and a second end portion 184 which is slidably mounted with a link mechanism 4.

Said fifth pivot 105 of the lift apparatus 100 is mounted on a point of the first arm 170. Said fifth pivot 105 is separated from said first pivot 101 by a distance D. Said distance D can be measured as the geometric projection on the first axis S. Two different pivots 101 and 105 spaced apart from each other advantageously allow the weight force of the cutting deck 2 to be better discharged during the lifting and when the cutting deck 2 is in at least one position raised off ground 99, thereby the arms 150, 170 and 180 are not to be very thick and heavy, thus conferring lightness to the lift apparatus 100.

Said cutting deck 2 mounts the link mechanism 4 which is separated from said first pivot 101. Said link mechanism 4 is mounted integrally with the cutting deck 2. The link mechanism 4 is mounted with a rear portion 25 of the cutting deck 2 close to a lower base 24 of the cutting deck 2. Two different jointing points of the first pivot 101 and of the link mechanism 4 advantageously allow the weight force of the cutting deck 2 to be better discharged during the lifting and when the cutting deck 2 is in at least one position raised off ground 99, thereby the arms 150, 170 and 180 do not need to be very thick and heavy, thus conferring lightness to the lift apparatus 100.

Said link mechanism 4 comprises a guide 40 which slidably mounts said second end portion 184 of the second arm 180 by means of a fourth pivot 104 of said second end portion 184 of the second arm 180.

Said guide 40 of the link mechanism 4 is completely arranged for the whole length thereof along a longitudinal axis L which is parallel to a geometric plane B which outlines the lower base 24 of the cutting deck 2. Said guide 40 comprises two end stops: a second front end stop 41 and a first rear end stop 45 on the opposite side. Said first end stop 45 comprises a retainer notch 42 of such a size as to engage said fourth pivot 104 of said second end portion 184 of the second arm 180 of the lift apparatus 100. Said retainer notch 42 is hollowed out in guide 40 in the position of the first end stop 45. Said retainer notch 42 is advantageously hollowed out in the direction perpendicular to the longitudinal axis L to allow the fourth pivot 104 to be integrally snappingly engaged with said link mechanism 4 when the cutting deck 2 is in at least one position raised off ground 99. Indeed when said fourth pivot 104 is engaged with said at least one retainer notch 42, said fourth pivot 104 advantageously safely blocks said cutting deck 2 in said at least one position raised off ground 99. The fourth pivot 104 engages with the retainer notch 42 when the cutting deck 2 is in a second position raised off ground 99 for the maintenance of the cutting blades of the cutting deck 2.

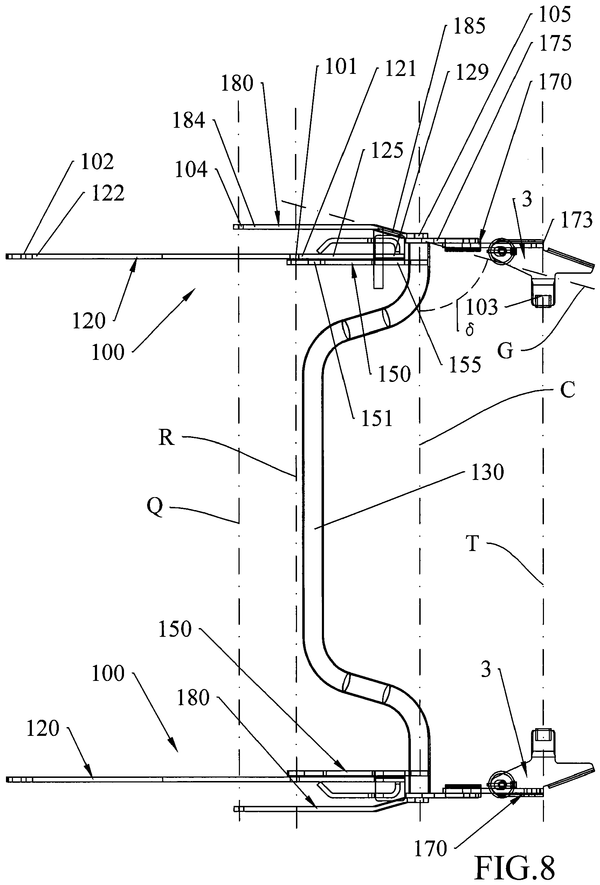

Said fifth pivot 105 is mounted with a second end portion 175 of said first arm 170. Said second end portion 175 of said first arm 170 is pivoted with said first end portion 185 of said second arm 180 by means of the fifth pivot 105. Said fifth pivot 105 identifies a fifth axis of rotation C, as shown in Figure 8. The second arm 180 rotates about said fifth axis of rotation C when the cutting deck 2 is lifted.

Said first arm 170 integrally mounts a third arm 150 of the lift apparatus 100 so that the third arm 150 always moves with said first arm 170.

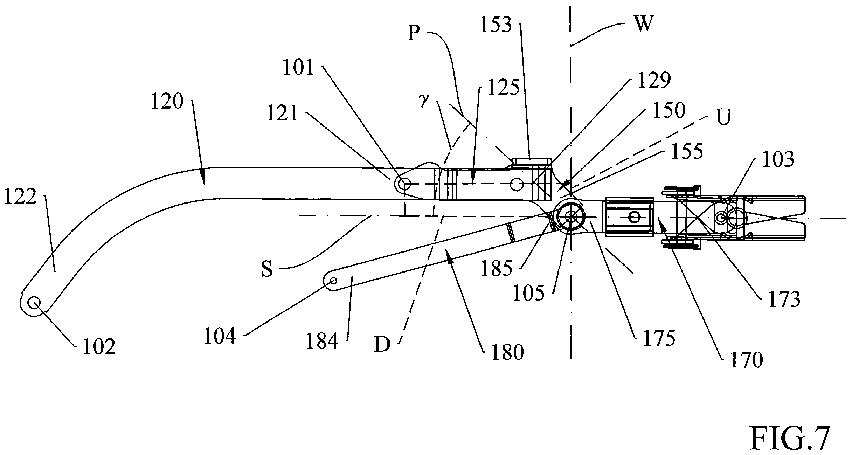

Said third arm 150 comprises a second portion 151 which extends by distance D in the same direction as the first arm 170 along the first axis S, and a first portion 155 which integrally links the third arm 150 with the first arm 170. Said second portion 151 of the third arm 150 is a prolongation of the first arm 170 along the first axis S. Said second portion 151 of the third arm 150 integrally mounts said first pivot 101 at distance D from the fifth pivot 105, as shown in particular in Figure 7. Said distance D spans between a length of the first arm 170 and one quarter of the length of the first arm 170. Said distance D is advantageous for avoiding the cutting deck 2 from touching ground 99 while it rotates about the first axis of pivot R, in said at least one position raised off ground 99, in particular from the first position raised off ground 99 to the second position raised off ground 99 for the maintenance of the cutting blades of the cutting deck 2.

Said second portion 151 of said third arm 150 is pivoted with said cutting deck 2 by means of the first pivot 101 and advantageously allows the cutting deck 2 to rotate about the first axis of pivot R.

The first portion 155 of the third arm 150 is inclined by a third angle γ with respect to the second portion 151 of the third arm 150. Said first portion 155 of the third arm 150 follows a third axis P. Said third angle γ is from 0 to 90 sexagesimal degrees. The first portion 155 of the third arm 150 advantageously allows said first pivot 101 to be lifted by a distance U with respect to the first axis S which extends the first arm 170. Said second portion 151 of the third arm 150 always remains parallel to the first axis S. Said distance U is measured on a vertical axis W which is perpendicular to the first axis S, as shown in particular in Figure 7.

The inclination of the first portion 155 of the third arm 150 advantageously allows the cutting deck 2 to be rotated about the first axis of pivot R identified by the first pivot 101 without any portion of the cutting deck 2 touching ground 99.

Said third arm 150 comprises an upper portion 153.

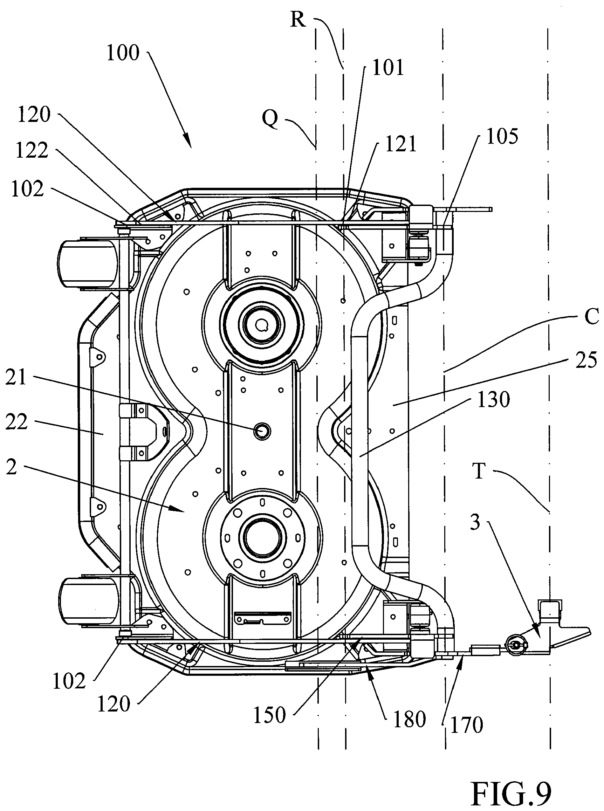

A rod 130 connects the first lift apparatus 100 and the second lift apparatus 100 between one side and the other of the lawn mower 1, as shown in Figures 8 to 9.

Rod 130 is mounted integrally with said first arm (170).

Rod 130 serves as an end stop for passing the cutting deck 2 from the lower position to the first position raised off ground 99. The upper end stop is identified by a front portion of frame 3.

Said frame 3 comprises a lower portion 35 of the front portion of frame 3. Said lower portion 35 of frame 3 identifies a second axis F, said lower portion 35 of frame 3 along the second axis F is inclined by a second angle β with respect to ground 99, said second angle β is from 10 to 80 sexagesimal degrees. The first position raised off ground 99 of the cutting deck 2 is identified by the lifting of the cutting deck 2 which rotates about the front axis T of the second angle β up to rod 130 being in abutment with the lower portion 35 of frame 3.

Said cutting deck 2 integrally mounts a support arm 120 of said lift apparatus 100.

Said support arm 120 comprises a front end portion 122 linked to the front portion 22 of the cutting deck 2 by means of a joint 102, a rear end portion 125 comprising a first portion 121 pivoted with said first pivot 101, and a second counterweight portion 129 at a rear end of said support arm 120. The second counterweight portion 129 is a prolongation of said support arm 120 toward the rear of the lawn mower 1. The first portion 121 of the rear end portion 125 of the support arm 120 is pivoted with said second portion 151 of the third arm 150 by means of the first pivot 101.

The lift apparatus 100 passes the cutting deck 2 from the lower position for cutting grass, in which a lower base 24 of the cutting deck 2 faces ground 99 with the longitudinal axis L and the first axis S which are parallel to ground 99, up to a first position raised off ground 99 of said at least one position raised off ground 99, with the longitudinal axis L parallel to the first axis S and both the axes L, S raised off ground 99 by the second angle β.

In said first position raised off ground 99, said upper portion 153 of said third arm 150 is in abutment with said counterweight portion 129 so that said counterweight portion 129 advantageously limits the rotational movement of the cutting deck 2 in downward anti-clockwise direction, thus avoiding the cutting deck 2 from falling back to the lower position of the cutting deck 2. Said counterweight portion 129 is advantageously an end stop for the cutting deck 2.

Said rod 130 is in abutment with said lower portion 35 of frame 3 in said first position raised off ground 99. Said lower portion 35 of said frame 3 is advantageously a first end stop for the cutting deck 2.

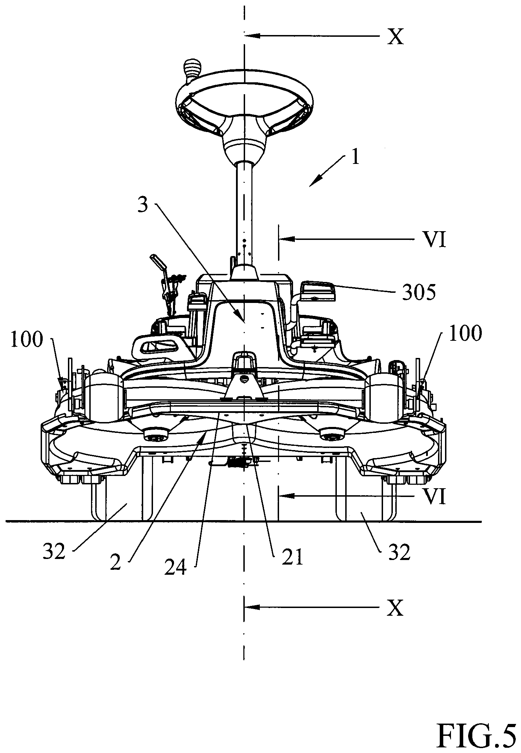

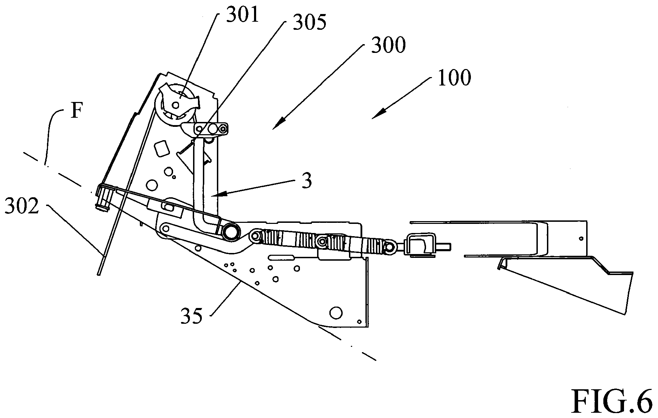

As shown in particular in Figures 5 to 6, the lift apparatus 100 comprises a lift mechanism 300 which is mounted with said frame 3, inside frame 3. Said lift mechanism 300 comprises at least one pedal 305 mounted externally on frame 3 to be reached by a foot of a user, at least one cord 302 and at least one pulley 301 set in motion by said at least one pedal 305. Said at least one pulley 301 lifts said at least one cord 302 which is linked to said cutting deck 2. Cord 302 is linked to the cutting deck 2 in a position close to the first pivot 101. Said lift mechanism 300 lifts the cutting deck 2 from the lower position to the first position raised off ground 99. The lift mechanism 300 advantageously allows the weight of the cutting deck 2 to be carried, thus avoiding the weight of the cutting deck 2 to be discharged onto the pivots 101 and 105 alone, thus avoiding the jointing points from being fragile where there are pivots 101 and 105. The lift mechanism 300 advantageously allows the diameter of the arms 170, 180, 150 to be reduced, thus increasing the lightness of the lift apparatus 100 and increasing safety, thus avoiding the pivots 101 and 105 from breaking.

The lift apparatus 100 allows said cutting deck 2 to be lifted up to a second position raised off ground 99 of said at least one position raised off ground 99. Said second position raised off ground 99 allows the maintenance of the cutting blades of the cutting deck 2 to be performed. Said second position raised off ground 99 for the maintenance of the cutting blades of the cutting deck 2 can be reached by manually lifting the front portion 22 of the cutting deck 2 upward, thus causing the cutting deck 2 to rotate about the first axis of pivot R identified by the first pivot 101. Once it has reached the end stop of guide 40, the fourth pivot 104 of the second arm 180 is engaged inside the retainer notch 42 to advantageously block the second position raised off ground 99 of the cutting deck 2 in a secure manner so that the user can safely perform the maintenance on cutting blades mounted under the cutting deck 2. Indeed, in said second position raised off ground 99, a lower base 24 of the cutting deck 2 faces the front direction of the lawn mower 1 with the longitudinal axis L inclined by a first angle α with respect to the first axis S, said first angle α is from 0 to 90 sexagesimal degrees.

Advantageously, the first portion 121 of the rear end portion 125 of the support arm 120 is not in front of the center of mass 21 of the cutting deck 2 in order to ensure that the cutting deck 2 may rotate freely on the first pivot 101 about the first axis of pivot R without touching ground 99 in the first position raised off ground 99 of the cutting deck 2. The first portion 121 is positioned in the rear end portion 125 of the support arm 120 and the counterweight portion 129 advantageously allows a counterweight to be obtained to the weight of the cutting deck 2 when it is in the second position raised off ground 99 for the maintenance of the cutting blades of the cutting deck 2.

A further advantage is given by the fact that the first pivot 101 is positioned so that the distance between the drive pulley 53 and the driven pulley 52 does not increase with the rotation, thus allowing the second position raised off ground 99 of the cutting deck 2 to be reached without disassembling and without detaching the driving belt 51 from its seat on the two pulleys 52 and 53.

When the cutting deck 2 is in the second position raised off ground 99, the front end portion 122 advantageously allows the weight of the cutting deck 2 to be discharged onto the first pivot 101. Moreover, another part of the weight of the cutting deck 2 is advantageously discharged from the second arm 180 onto the fifth pivot 105. Said other part of the weight of the cutting deck 2 is discharged even better onto the fifth pivot 105 without breaking it, which is advantageously due to the fact that said first portion 185 of said second arm 180 of the lift apparatus 100 is inclined by a fourth angle δ with respect to a fifth axis of rotation C identified by said fifth pivot 105. Said first portion 185 of said second arm 180 follows an axis of bending G. As shown in Figure 8, said fourth angle δ is from 10 to 80 sexagesimal degrees, thus advantageously allowing safer discharging of the weight of the cutting deck 2 without breaking the lift apparatus 100.

The center of mass 21 of the cutting deck 2 being arranged in an advanced position toward the front of the lawn mower 1 and the center of mass 21 being not positioned in front of the first pivot 101 also allow a further technical advantage to be achieved due to the fact that the front end portion 122 pushes the cutting deck 2 downward to the lower position, thus avoiding the risk of the cutting deck 2 overturning, making the work of the user dangerous. Thereby, the lift apparatus 100 according to the present invention advantageously allows the lawn mower 1 to be operated more safely when the grass is cut as compared to the lift apparatuses of the prior art.

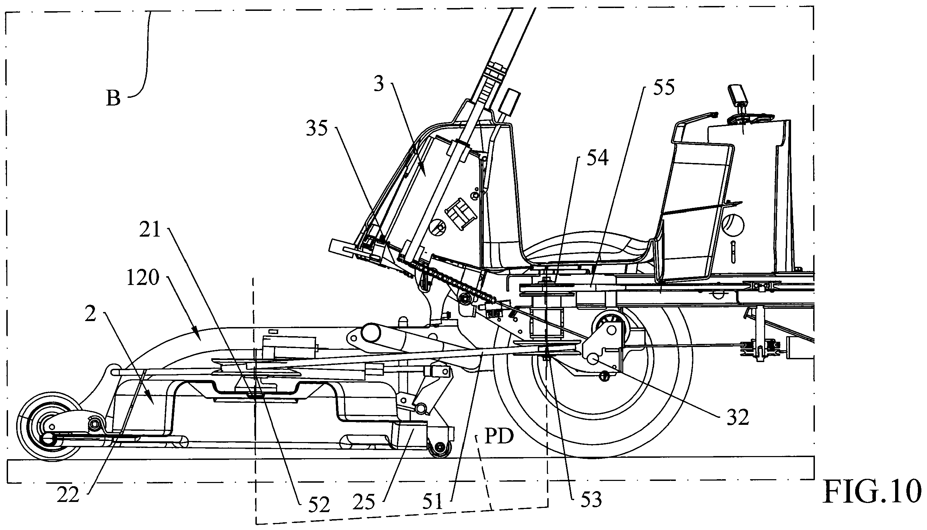

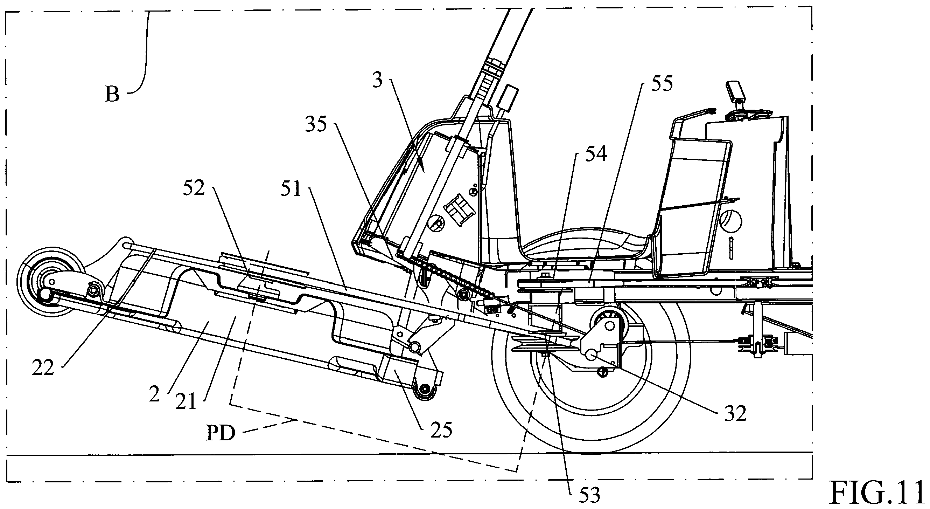

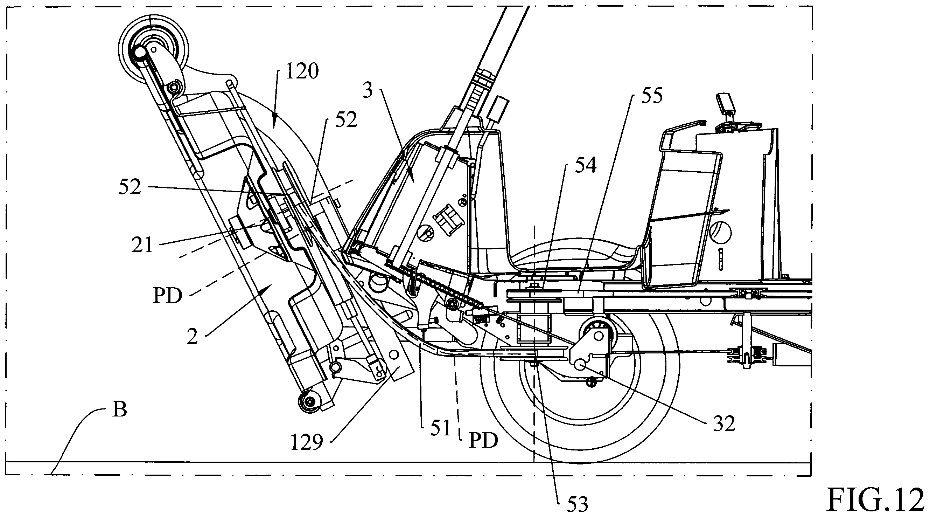

As is shown in Figures 10 to 12, the position of the first pivot 101 with respect to the position of the center of mass 21 of the cutting deck 2 promotes the lifting of the cutting deck 2 from the lower position to any one of the positions raised off ground 99, without there being a need to disassemble or detach a driving belt 51 between a drive pulley 53 which is rotatably mounted with frame 3 and a driven pulley 52 which is rotatably mounted with the cutting deck 2.

Said drive pulley 53 is mounted integrally with another drive pulley 54 which is at a greater height from ground 99 with respect to the drive pulley 53. Said other drive pulley 54 is coupled to another driving belt 55, which is in turn coupled to a pulley of a motor (not shown in the figures).

The position of the first pivot 101 with respect to the position of the center of mass 21 of the cutting deck 2 allows a distance PD between the drive pulley 53 and the driven pulley 52 to remain constant when the cutting deck 2 passes from the lower position to any one of the positions raised off ground 99, i.e. during the rotation of the cutting deck 2 about the first axis of pivot R of the first pivot 101, without disassembling and without detaching the driving belt 51 from the seat thereof on the two pulleys 52 and 53. Distance PD between the drive pulley 53 and the driven pulley 52 is measured along the driving belt 51, as shown in Figures 10 to 12, 18.

With regard to operation, the lift apparatus 100 passes the cutting deck 2 in sequence from the lower position to the first position raised off ground 99 up to the second position raised off ground 99 for the maintenance of the cutting blades of the cutting deck 2.

As shown in Figures 1 to 2, the first axis S along the first arm 170 and the longitudinal axis L along guide 40 are parallel to ground 99 in the lower position of the cutting deck 2.

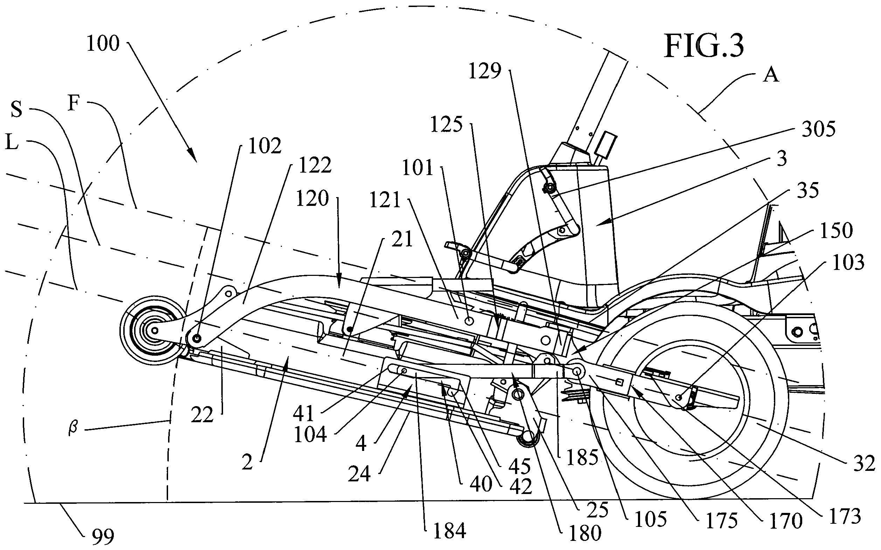

As shown in particular in Figure 3, mechanism 300 lifts cord 302, thus causing the first arm 170 to be raised. The first arm 170 rotates about the front axis T of the third pivot 103, thus lifting the third arm 150 and the first pivot 101 together. The first arm 170 lifts the cutting deck 2 from the lower position to the first position raised off the ground in which rod 130 abuts with the lower portion 35 of frame 3. The second arm 180 rotates about the fifth axis C of the fifth pivot 105, while the fourth pivot 104 remains close to the second end stop 41 and does not slide inside guide 40 of the link mechanism 4.

Once the first position raised off ground 99 of the cutting deck 2 is reached, the first arm 170 cannot be lifted. The user may advantageously lift the cutting deck 2 from the lower position to the first position raised off ground 99 without removing his/her hands from a steering wheel of the lawn mower 1, rather by simply using pedal 305 with a foot. Said first position raised off ground 99 of the cutting deck 2 is advantageously useful for when the lawn mower 1 is moved from storage to a place where cutting of the grass should occur, so that the cutting blades are not damaged and the lower base 24 of the cutting deck 2 is not damaged either.

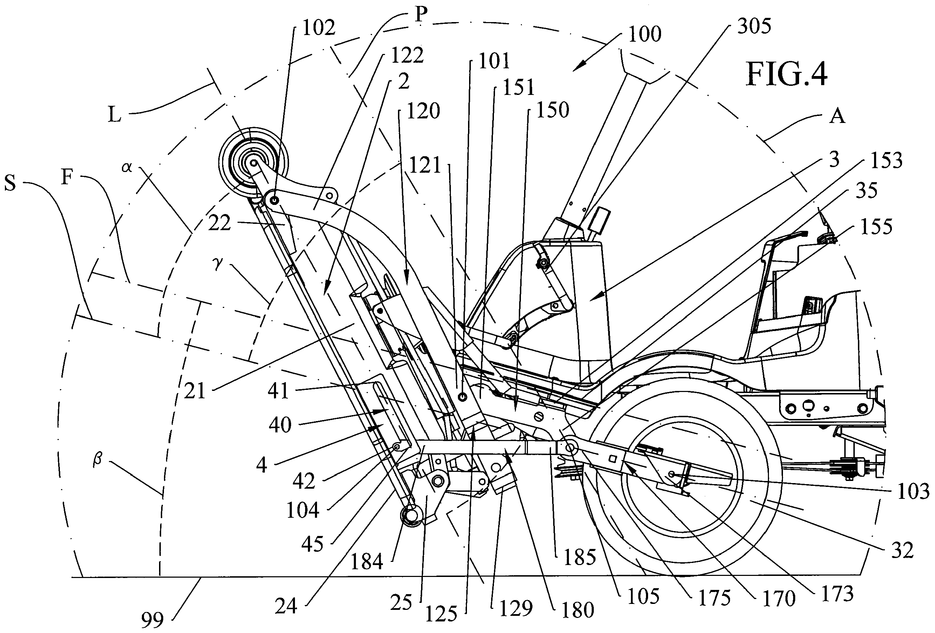

As shown in Figure 4, the cutting deck 2 may be lifted manually by taking it from the front portion 22 and lifting it upward and causing said cutting deck 2 to rotate about the first axis of pivot R of the first pivot 101. The second counterweight portion 129 of the rear end portion 125 of the support arm 120 rotates about the first axis of pivot R to counterbalance the weight of the cutting deck 2 in the second position raised off ground 99 and to advantageously keep the cutting deck 99 stopped in a position of unstable balance when it is in the position raised off ground 99. The second arm 180 no longer rotates about the fifth axis C of the fifth pivot 105, but the fourth pivot 104 slides inside guide 40 of the link mechanism 4 up to reaching the first end stop 45. The fourth pivot 104 can also be engaged with the retainer notch 42 of guide 40 so as to cause the cutting deck 2 to remain safely blocked in the second position raised off ground 99 without the risk of the cutting deck 2 returning to the first position raised off ground 99. The second counterweight portion 129 of the support arm 120 indeed advantageously allows the cutting deck 2 to be positioned stopped in the second position raised off ground 99 without the cutting deck 2 moving from this position of unstable balance and thus allowing the user not to make an effort when holding the cutting deck 2 stopped in the second position raised off ground 99. Thereby, a single user alone may advantageously remove his/her hands from the cutting deck 2 and the fourth pivot 104 automatically engages in the retainer notch 42 to safely maintain the second position raised off ground 99 of the cutting deck 2. At this point, operations may be safely performed on the front of the lawn mower 1 for the maintenance of the cutting blades of the cutting deck 2.

To return to the lower position, it is sufficient for the user to lift the cutting deck 2 up to disengaging the fourth pivot 104 from the retainer notch 42 and to repeat the lifting operations in reverse order.

Alternatively, the first arm 170 and the third arm 150 are a single piece and the third arm 150 is a prolongation of the first arm 170 along the first axis S. In said alternative, the first pivot 101 in mounted with the first arm 170 and pivots said cutting deck 2. The first pivot 101 and the fifth pivot 105 are mounted on the first arm 170 and are separated by distance D measured along axis S.

One alternative provided is that said guide 40 of said link mechanism 4 is in the form of an arc of circumference and at least one portion of the arc of circumference is arranged along the longitudinal axis L so as to facilitate the sliding of the fourth pivot 104 along guide 40 when the cutting deck 2 passes from the lower position to the raised positions. Two end portions of said at least one portion of the arc of circumference are arranged to intersect the longitudinal axis L.

Alternatively again, the first arm 170 may be one arm alone, and it may be mounted on one side of the lawn mower 1.

In a further alternative, said guide 40 can comprise a multiplicity of retainer notches 42 of such a size as to engage said fourth pivot 104 of said second end portion 184 of said second arm 180 of the lift apparatus 100. Each of said multiplicity of retainer notches 42 advantageously safely blocks a single position raised off ground 99 of the cutting deck 2 of the multiplicity of positions raised off ground 99 of the cutting deck 2.

In further alternative again, the cutting deck 2 can be mounted behind frame 3.

In an alternative again, the link mechanism 4 is in one piece with the cutting deck 2.

Alternatively again, the upper portion 153 can be in one piece with the first arm 170.

In a further alternative again, more than one pulley 301 are included.

There is provided an alternative again, in which said cutting deck 2 is mounted behind frame 3.

Another alternative is provided, in which the first pivot 101 is positioned so that distance PD between the drive pulley 53 and the driven pulley 52 varies its length between 0% and 3% with the rotation, thus allowing the second position raised off ground 99 of the cutting deck 2 to be reached without disassembling and without detaching the driving belt 51 from its seat on the two pulleys 52 and 53. The position of the first pivot 101 with respect to the position of the center of mass 21 of the cutting deck 2 allows distance PD between the drive pulley 53 and the driven pulley 52 to vary its length between 0% and 0.5% when the cutting deck 2 passes from the lower position to the first position raised off ground 99. The position of the first pivot 101 with respect to the position of the center of mass 21 of the cutting deck 2 allows distance PD between the drive pulley 53 and the driven pulley 52 to vary its length between 0.5% and 3% when the cutting deck 2 passes from the first position raised off ground 99 to the second position raised off ground 99, i.e. during the rotation of the cutting deck 2 about the first axis of pivot R of the first pivot 101, without disassembling and without detaching the driving belt 51 from the seat thereof on the two pulleys 52 and 53.

For example, distance PD between the drive pulley 53 and the driven pulley 52 is 546 mm when the cutting deck 2 is in the lower position. Distance PD becomes 544 mm when the cutting deck 2 is in the first position raised off ground 99, thus varying its length by 0.4%. Distance PD becomes 560 mm when the cutting deck 2 is in the second position raised off ground 99, thus varying its length by 2.5%.

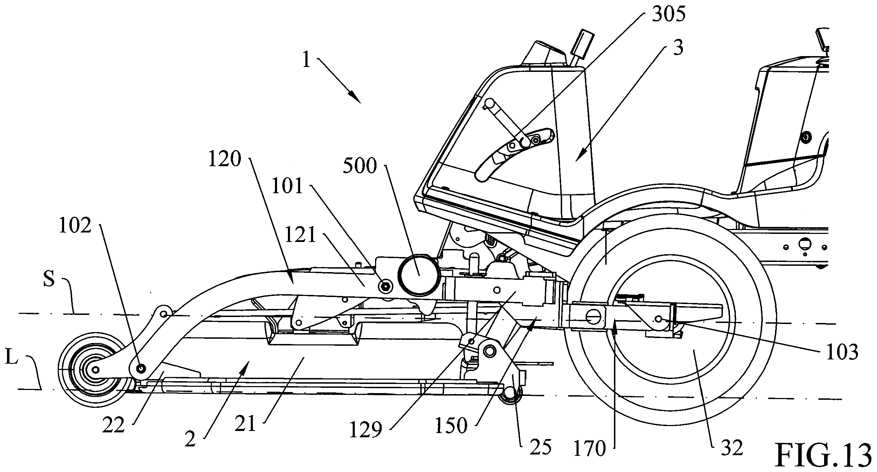

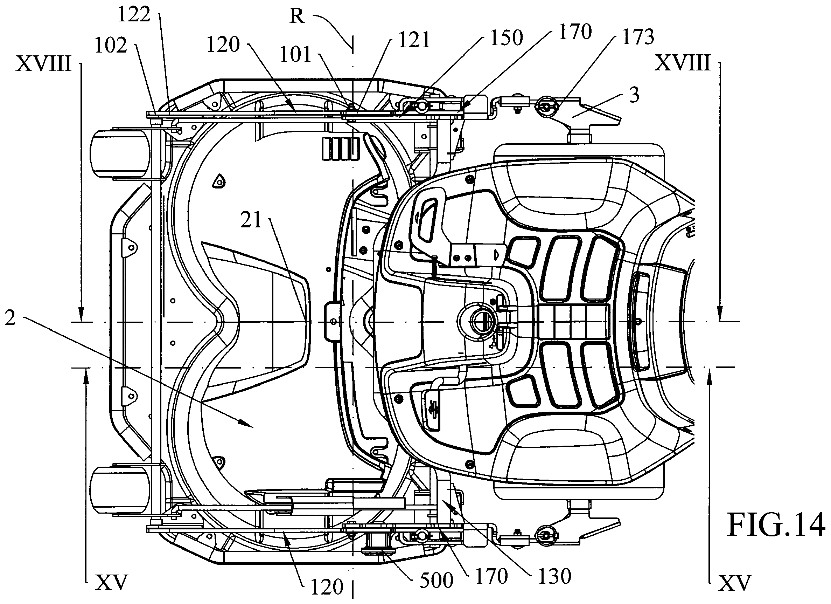

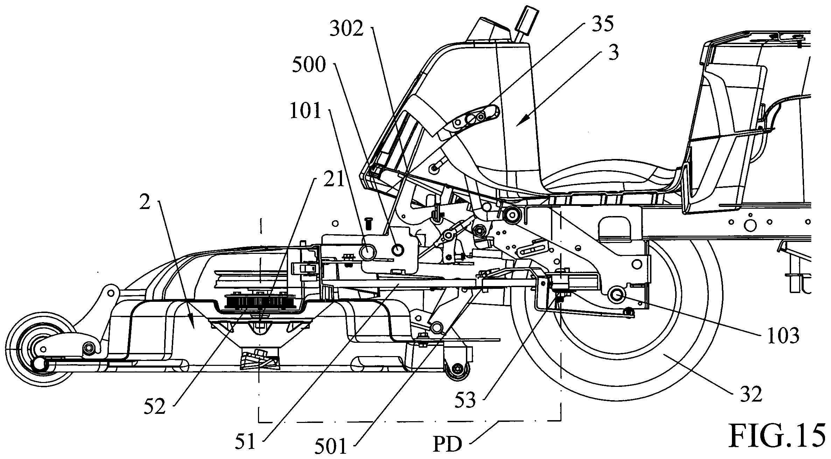

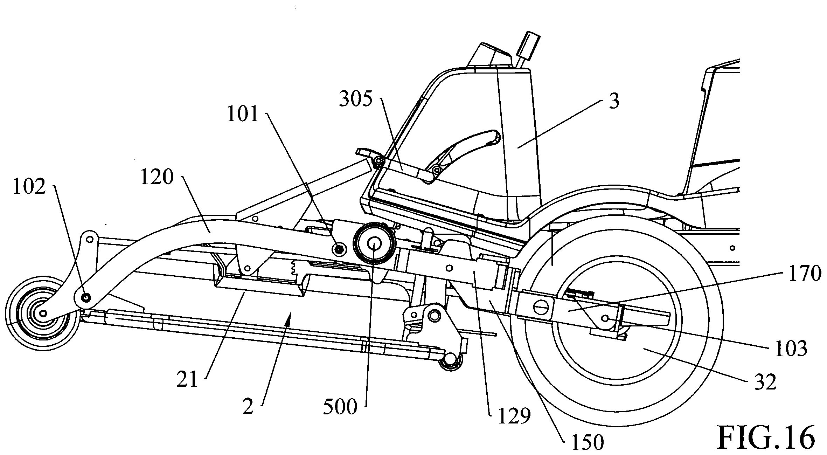

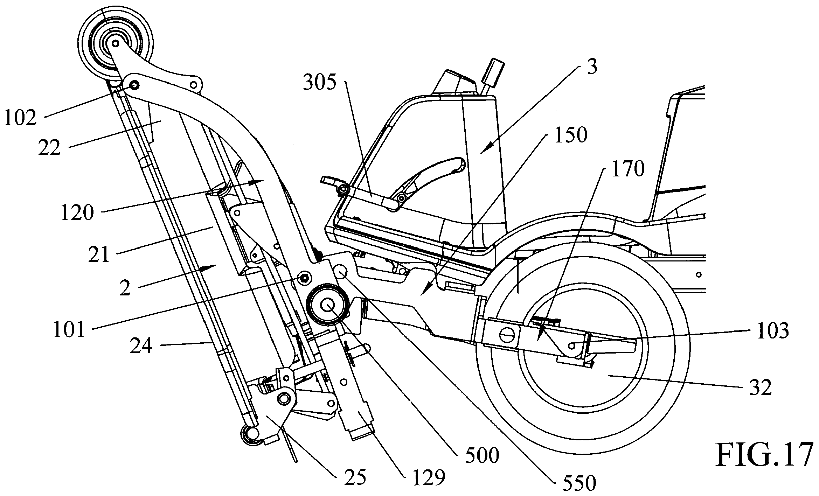

An alternative again is shown in Figures 13 to 18, where an alternative lawn mower 1 is shown comprising an alternative lift apparatus 100 comprising said first arm 170 which comprises said prolongation 150, but without the second arm 180, without the link mechanism 4, without the fourth pivot 105. Said prolongation 150 of the first arm 170 of the alternative lift apparatus 100 integrally mounts a third arm 150 of the lift apparatus 100. Said third arm 150 comprises said second portion 151 which extends by distance D in the same direction as the first arm 170 along the first axis S, and the first portion 155 which integrally links the third arm 150 with the first arm 170, said second portion 151 of the third arm 150 integrally mounts said first pivot 101, said second portion 151 of said third arm 150 is pivoted with said cutting deck 2. Said second portion 151 of the third arm 150 is parallel to the first axis S and is inclined by the third angle γ with respect to the first portion 155, said third angle γ is from 0 to 90 sexagesimal degrees. The cutting deck 2 of the lawn mower 1 mounts at least one support arm 120 of the lift apparatus 100, said at least one support arm 120 comprises a front end portion 122 linked to the front portion 22 of the cutting deck 2 by means of a joint 102, a rear end portion 125 comprising a second portion 121 pivoted with said first pivot 101 and a first counterweight portion 129 at a rear end of said at least one support arm 120. As shown in Figure 17, the second portion 121 mounts a safety handle 500 which automatically engages by means of a recall spring, engaging integrally the first arm 170 with the support arm 120 in the lower position of the cutting deck 2 so as to keep fixed the lower position of the cutting deck 2. The handle 500 blocks prolongation 150 of the first arm 170 by passing through a bond 550 with the support arm 120. In order to cause the cutting deck 2 to pass from the lower position to the first position raised off ground 99, handle 500 is left blocked so that the first arm 170 remains integral with the support arm 120 while the cutting deck 2 rotates about the third pivot 103. Then, in order to lift the cutting deck 2 from the first position raised off ground 99 to the second position raised off ground 99, there is a need to release the safety handle 500 to allow support arm 120 to be released from bond 550 which is identified by the safety handle 500 which kept it integrally connected to the first arm 170, and to continue rotating the cutting deck 2 about the axis of rotation R identified by the first pivot 101 up to the second position raised off ground 99. Bond 550 is a hole made on the first arm 170 or on prolongation 150 thereof.

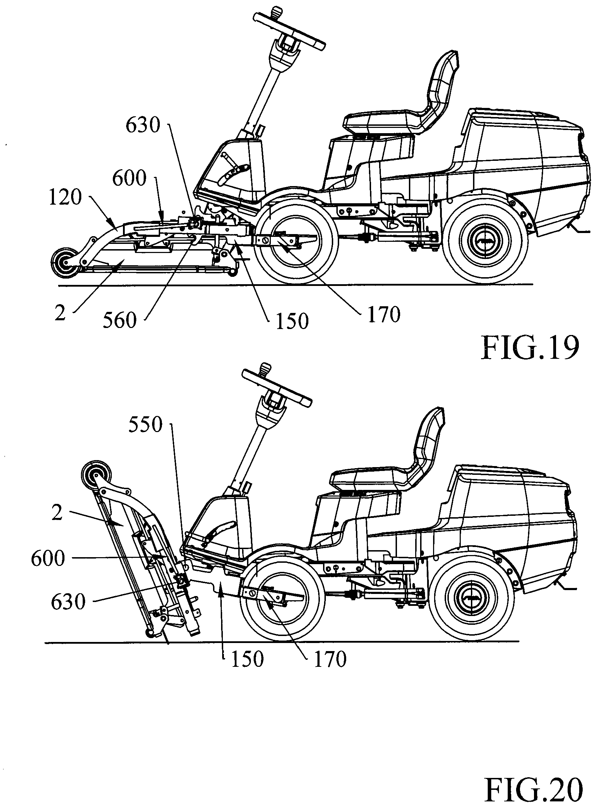

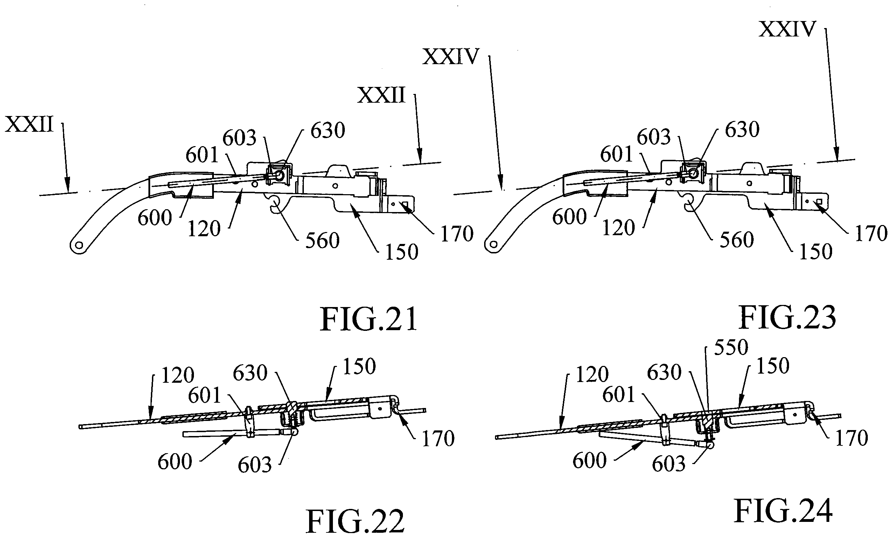

A further alternative is shown in Figures 19 to 24 and includes a block lever 600 provided in place of the safety handle 500.

Alternatively, as shown in Figures 19 to 24, the support arm 120 mounts a block lever 600 which engages a block pin 630 passing through a bond 550 of the first arm 170, thus making the first arm 170 integral with the support arm 120 in the lower position of the cutting deck 2 and keeping fixed the lower position of the cutting deck 2. The support arm 120 comprises a fulcrum 601 which pivots said block lever 600. Said fulcrum 601 is an outward prolongation which allows said block lever 600 to tilt. Said block lever 600 comprises an end portion 603 which mounts a pivot 630 which engages in bond 550 which is a hole made on the first arm 170 or on prolongation 150, thus making the first arm 170 integral with the support arm 120 in the lower position of the cutting deck 2 so as to keep fixed the lower position of the cutting deck 2. Pivot 630 of the block lever 600 blocks prolongation 150 of the first arm 170 by passing through bond 550 with the support arm 120. In order to cause the cutting deck 2 to pass from the lower position to the first position raised off ground 99, pivot 630 of the block lever 600 is left blocked so that the first arm 170 remains integral with the support arm 120 while the cutting deck 2 rotates about the third pivot 103. Then, in order to lift the cutting deck 2 from the first position raised off ground 99 to the second position raised off ground 99, there is a need to lift the block lever 600 to cause pivot 630 to come out of bond 550 so as to allow the support arm 120 to be released from the prolongation 150 of the first arm 170 and to continue rotating the cutting deck 2 about the axis of rotation R identified by the first pivot 101 up to the second position raised off the ground 99.

A further alternative may be provided, as shown in Figures 17, 19 to 24, where prolongation 150 of the first arm 170 comprises a further bond 560. Said further bond 560 fixes handle 500 or the block lever 600 when the cutting deck 2 is in the second position raised off ground 99 for the maintenance of the cutting blades of the cutting deck 2.

The first arm 170 can comprise said further bond 560. When said cutting deck 2 is in the second position raised off ground 99 for the maintenance of the cutting blades of the cutting deck 2, handle 500 blocks the support arm 120 with the first arm 170.

The first arm 170 can also comprise said further bond 560 and when said cutting deck 2 is in the second position raised off ground 99 for the maintenance of the cutting blades of the cutting deck 2, the block lever 600 passes said block pin 630 of the block lever 600 through said further bond 560. Said block pin 630 of the block lever 600 blocks the support arm 120 with the first arm 170.

As shown in particular in Figures 19, 21, 23, said further bond 560 is in the shape of a hook, but it could also be a through hole. When the cutting deck 2 is in the second position raised off ground 99, handle 500 may be fixed with said further bond 560. Alternatively, when the cutting deck 2 is in the second position raised off ground 99, the block lever 600 may be fixed with said further bond 560, thus causing pivot 630 of the block lever to penetrate in contrast with the further bound 560.

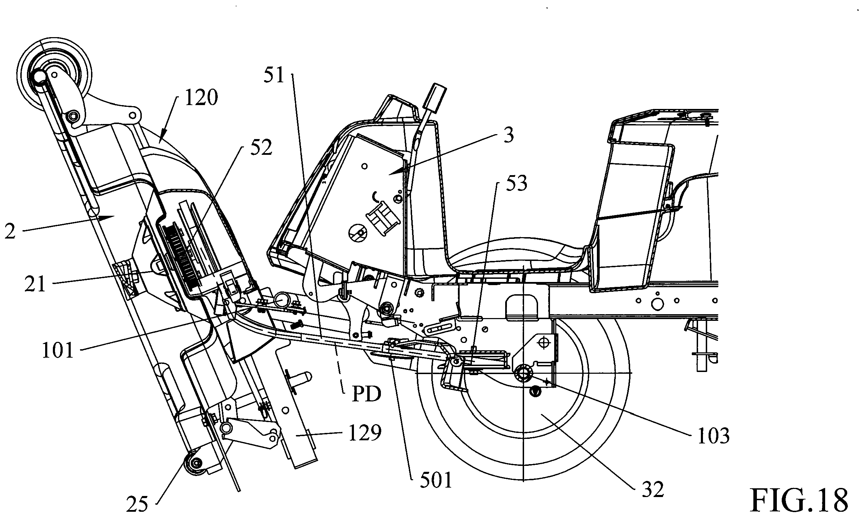

Alternatively again, belt 51 may be kept taught by a tensioner 501 of the lawn mower 1. Said tensioner 501 is a pulley mounted integrally with frame 3, as shown for example in Figure 18.

Advantageously, the lift apparatus 100 of the cutting deck 2 of the lawn mower 1 is safe, easy to be constructed, is not complex and lasts longer over time without breaking, thus allowing the positions raised off ground 99 of the cutting deck 2 to be safely kept over time. Moreover, the lift apparatus 100 is very lightweight, indeed all the arms thereof 170, 180, 120, 150 are thin and lightweight since the weight load forces of the cutting deck 2 are not discharged onto particularly fragile points of pivot 101, 105 alone, but they are absorbed by the geometry of the lift apparatus 100 itself.

## Claims

1. Lawn mower (1) comprising a frame (3), a cutting deck (2) and at least one lift apparatus (100) disposed on a side of the lawn mower (1) and which links the cutting deck (2) with the frame (3), said lift apparatus (100) comprises a first arm (170), said first arm (170) comprises a first end portion (173) which is pivoted by means of a third pivot (103) to said frame (3), said first arm (170) is integral with a first pivot (101) which pivots said cutting deck (2), said first pivot (101) of the lift apparatus (100) is integral with the cutting deck (2) and said lift apparatus (100) passes said cutting deck (2) from a lower position for cutting grass to at least one position raised off the ground (99), said frame (3) comprises a drive pulley (53) linked to a motor of the lawn mower (1) and said cutting deck (2) comprises a driven pulley (52) linked by means of at least one belt (51) to said drive pulley (53), said drive pulley (53) is rotatably mounted with the frame (3) and said driven pulley (52) is rotatably mounted with the cutting deck (2), **characterized in that** a distance (PD) between the drive pulley (53) and the driven pulley (52) measured along the belt (51) varies its length between 0% and 3% during the passage of the cutting deck (2) from the lower position to any one of said at least one position raised off the ground (99), said lift apparatus (100) is suitable for passing the cutting deck (2) from the lower position for cutting grass wherein a lower base (24) of the cutting deck (2) is faced toward the ground (99) with a longitudinal axis (L) which is parallel to a geometric plane (B) which outlines a lower base (24) of the cutting deck (2) and a first axis (S) which extends along said first arm (170) which are parallel to the ground (99), to a first position raised off the ground (99) of said at least one position raised off the ground (99) with the longitudinal axis (L) parallel to the first axis (S) and both the axes (L, S) raised off the ground (99) by a second angle (β), up to a second position raised off the ground (99) of said at least one position raised off the ground (99), at said second position raised off the ground (99) a lower base (24) of the cutting deck (2) is faced toward front direction of the lawn mower (1) with the longitudinal axis (L) is inclined by a first angle (α) with respect to the first axis (S), said second position raised off the ground (99) is for maintenance of cutting blades of the cutting deck (2), the distance (PD) between the drive pulley (53) and the driven pulley (52) ranges the length between 0% and 0,5% during the passage of the cutting deck (2) from the lower position to the first position raised off the ground (99) and that the distance (PD) between the drive pulley (53) and the driven pulley (52) ranges the length between 0.5% and 3% during the passage of the cutting deck (2) from the first position raised off the ground (99) to the second position raised off the ground (99) for maintenance of the cutting blades of the cutting deck (2).

2. Lawn mower (1) according to claim 1, **characterized in that** said cutting deck (2) mounts a link mechanism (4) of said lift apparatus (100), said link mechanism (4) is separated from said first pivot (101), **characterized in that** said at least one lift apparatus (100) comprises a second arm (180) comprising a first end portion (185) pivoted with a fifth pivot (105) and a second end portion (184) which is slidably mounted with the link mechanism (4), said fifth pivot (105) of the lift apparatus (100) is integral with said first arm (170) and said fifth pivot (105) is separated from said first pivot (101), said link mechanism (4) comprises a guide (40) which slidably mounts said second end portion (184) of said second arm (180) by means of a fourth pivot (104) of said second end portion (184) of said second arm (180).

3. Lawn mower (1) according to claim 2, **characterized in that** said guide (40) of said link mechanism (4) comprises at least one portion disposed along the longitudinal axis (L), said guide (40) comprises at least one retainer notch (42) which is of a size to engage said fourth pivot (104) of said second end portion (184) of said second arm (180) of the lift apparatus (100), said fourth pivot (104) engages said at least one retainer notch (42) to block said cutting deck (2) to said at least one position raised off the ground (99).

4. Lawn mower (1) according to claim 3, **characterized in that** said guide (40) of said link mechanism (4) is entirely disposed along the longitudinal axis (L).

5. Lawn mower (1) according to claim 3, **characterized in that** said guide (40) of said link mechanism (4) in the form of an arc of circumference and at least one portion of the arc of circumference is disposed along the longitudinal axis (L).

6. Lawn mower (1) according to any one of the claims 2-5, **characterized in that** said fifth pivot (105) is mounted with a second end portion (175) of said first arm (170), said second end portion (175) of said first arm (170) is pivoted with said first end portion (185) of said second arm (180), said first arm (170) integrally mounts at least one third arm (150) of the lift apparatus (100), said third arm (150) comprises a second portion (151) which extends of a distance (D) toward a same direction of the first arm (170) and a first portion (155) which integrally links the third arm (150) with the first arm (170), said second portion (151) of the third arm (150) integrally mounts said first pivot (101), said second portion (151) of said third arm (150) is pivoted with said cutting deck (2).

7. Lawn mower (1) according to claim 6, **characterized in that** said second portion (151) of the third arm (150) is parallel to the first axis (S) and is inclined by a third angle (γ) with respect to the first portion (155), said third angle (γ) is comprised between 0 and 90 sexagesimal degrees.

8. Lawn mower (1) according claim 1, **characterized in that** said first arm (170) comprises a prolongation (150), said prolongation (150) of the first arm (170) integrally mounts a third arm (150) of the lift apparatus (100), said third arm (150) comprises a second portion (151) which extends of a distance (D) toward a same direction of the first arm (170) along a first axis (S) and a first portion (155) which integrally links the third arm (150) with the first arm (170), said second portion (151) of the third arm (150) integrally mounts said first pivot (101), said second portion (151) of said third arm (150) is pivoted with said cutting deck (2).

9. Lawn mower (1) according to claim 8, **characterized in that** said second portion (151) of the third arm (150) is parallel to the first axis (S) and it is inclined by a third angle (γ) with respect to the first portion (155), said third angle (γ) is comprised between 0 and 90 sexagesimal degrees.

10. Lawn mower (1) according to any one of the preceding claims, **characterized in that** a rod (130) is integrally mounted with said first arm (170), said frame (3) comprises a lower portion (35) which identifies a second axis (F), said lower portion (35) of the frame (3) along the second axis (F) is inclined by a second angle (β) with respect to the ground (99), said second angle (β) is comprised between 10 and 80 sexagesimal degrees, said rod (130) is in abutment with said lower portion (35) in said at least one position raised off the ground (99) of said cutting deck (2), said lower portion (35) of said frame (3) is a first end stop for the cutting deck (2).

11. Lawn mower (1) according to any one of the preceding claims, **characterized in that** said cutting deck (2) comprises a front portion (22), a rear portion (25) and a center of mass (21) between the front portion (22) and the rear portion (25), said cutting deck (2) mounts at least one support arm (120) of the lift apparatus (100), said at least one support arm (120) comprises a front end portion (122) linked by means of a joint (102) to the front portion (22) of the cutting deck (2), a rear end portion (125) comprising a second portion (121) pivoted with said first pivot (101) and a first counterweight portion (129) at a rear end portion of said at least one support arm (120).

12. Lawn mower (1) according to claim 11, **characterized in that** said first counterweight portion (129) is in abutment with an upper portion (153) of said third arm (150), said first counterweight portion (129) is advantageously an end stop for the cutting deck (2).

13. Lawn mower (1) according to any one of the claims 11 or 12, **characterized in that** the second portion (121) mounts a safety handle (500) which automatically engages by means of a recall spring engaging integrally the first arm (170) with the support arm (120) at the lower position of the cutting deck (2) maintaining fixed the lower position of the cutting deck (2), said safety handle (500) blocks the first arm (170) passing through a bond (550) with the support arm (120)

14. Lawn mower (1) according to any one of the claims 11 or 12, **characterized in that** the support arm (120) mounts a block lever (600) which engages a block pin (630) passing through a bond (550) of the first arm (170), the first arm (170) being integral with the support arm (120) at the lower position of the cutting deck (2), maintaining fixed the lower position of the cutting deck (2).

15. Lawn mower (1) according to claim 13, **characterized in that** the first arm (170) comprises a further bond (560), when said cutting deck (2) is at the second position raised off the ground (99) for maintenance of the cutting blades of the cutting deck (2), the safety handle (500) blocks the support arm (120) with the first arm (170).

16. Lawn mower (1) according to claim 14, **characterized in that** the first arm (170) comprises a further bond (560), when said cutting deck (2) is at the second position raised off the ground (99) for maintenance of the cutting blades of the cutting deck (2), the block lever (600) passes said block pin (630) of the block lever (600) through said further bond (560), said block pin (630) of the block lever (600) blocks the support arm (120) with the first arm (170).

17. Lawn mower (1) according to any one of the claims 2-7, 10-16, **characterized in that** said first portion (185) of said second arm (180) of the lift apparatus (100) is inclined by a fourth angle (δ) with respect to a fifth axis of rotation (C) identified by said fifth pivot (105), said fourth angle (δ) is comprised between 10 and 80 sexagesimal degrees.

18. Lawn mower (1) according to any one of the claims 1-17, **characterized in that** said second angle (β) is comprised between 10 and 80 sexagesimal degrees and that said first angle (α) is comprised between 0 and 90 sexagesimal degrees.

19. Lawn mower (1) according to any one of the preceding claims, **characterized in that** the lift apparatus (100) comprises a lift mechanism (300) which is mounted with said frame (3), said lift mechanism (300) comprises at least one pedal (305), at least one cord (302) and at least one pulley (301) set in motion by said at least one pedal (305), said at least one pulley (301) raises said at least one cord (302), said at least one cord (302) is linked to said cutting deck (2) for lifting it to said at least one position raised off the ground (99).

20. Lawn mower (1) according to any one of the preceding claims, **characterized in that** said cutting deck (2) is mounted frontally with the frame (3), that the lawn mower (1) comprises two lift apparatuses (100) with two first arms (170) which are pivoted by means of two third pivots (103) to a front axis (T) of two front wheels (32) which are rotatably mounted with the frame (3).

## Patentansprüche

1. Rasenmäher (1) mit einem Rahmen (3), einem Mähwerk (2) und mindestens einer Hebevorrichtung (100), die an einer Seite des Rasenmähers (1) angeordnet ist und das Mähwerk (2) mit dem Rahmen (3) verbindet, wobei die Hebevorrichtung (100) einen ersten Arm (170) aufweist, wobei der erste Arm (170) einen ersten Endbereich (173) aufweist, der mittels eines dritten Drehpunkts (103) an dem Rahmen (3) angelenkt ist, wobei der erste Arm (170) einstückig mit einem ersten Drehpunkt (101) ausgebildet ist, an dem das Mähwerk (2) angelenkt ist, wobei der erste Drehpunkt (101) der Hebevorrichtung (100) mit dem Mähwerk (2) einstückig ausgebildet ist und die Hebevorrichtung (100) das Mähwerk (2) von einer unteren Position zum Mähen von Gras in mindestens eine vom Boden (99) abgehobene Position verlagert, wobei der Rahmen (3) eine Antriebsscheibe (53) aufweist, die mit einem Motor des Rasenmähers (1) gekoppelt ist, und das Mähwerk (2) eine angetriebene Scheibe (52) aufweist, die mittels mindestens eines Riemens (51) mit der Antriebsscheibe (53) gekoppelt ist, wobei die Antriebsscheibe (53) an dem Rahmen (3) drehbar angebracht ist und die angetriebene Scheibe (52) an dem Mähwerk (2) drehbar angebracht ist,
**dadurch gekennzeichnet, dass** eine Distanz (PD) zwischen der Antriebsscheibe (53) und der angetriebenen Scheibe (52), gemessen entlang des Riemens (51), während der Verlagerung des Mähwerks (2) von der unteren Position in eine beliebige der mindestens einen vom Boden (99) abgehobenen Position in ihrer Länge zwischen 0 % und 3 % variiert, wobei die Hebevorrichtung (100) geeignet ist zum Verlagern des Mähwerks (2) von der unteren Position zum Mähen von Gras, in der eine untere Basis (24) des Mähwerks (2) zum Boden (99) weist, - wobei eine Längsachse (L), die parallel zu einer geometrischen Ebene (B) ist, welche eine untere Basis (24) des Mähwerks (2) bezeichnet, und eine erste Achse (S), die sich entlang des ersten Arms (170) erstreckt, parallel zum Boden (99) sind -, in eine erste vom Boden (99) abgehobene Position der mindestens einen vom Boden (99) abgehobenen Position, wobei die Längsachse (L) parallel zur ersten Achse (S) ist und beide Achsen (L, S) in einem zweiten Winkel (β) vom Boden (99) abgehoben sind, bis in eine zweite vom Boden (99) abgehobene Position der mindestens einen vom Boden (99) abgehobenen Position, wobei in der zweiten vom Boden (99) abgehobenen Position eine untere Basis (24) des Mähwerks (2) in Richtung zur Vorderseite des Rasenmähers (1) weist, wobei die Längsachse (L) in einem ersten Winkel (α) in Bezug auf die erste Achse (S) geneigt ist, wobei die zweite vom Boden (99) abgehobene Position zur Wartung von Schneidmessern des Mähwerks (2) dient, wobei die Distanz (PD) zwischen der Antriebsscheibe (53) und der angetriebenen Scheibe (52) während der Verlagerung des Mähwerks (2) von der unteren Position in die erste vom Boden (99) abgehobene Position in der Länge zwischen 0 % und 0,5 % variiert, und dass die Distanz (PD) zwischen der Antriebsscheibe (53) und der angetriebenen Scheibe (52) während der Verlagerung des Mähwerks (2) von der ersten vom Boden (99) abgehobenen Position in die zweite vom Boden (99) abgehobene Position zur Wartung der Schneidmesser des Mähwerks (2) in der Länge zwischen 0,5 % und 3 % variiert.

2. Rasenmäher (1) nach Anspruch 1,
**dadurch gekennzeichnet, dass** an dem Mähwerk (2) ein
Verbindungsmechanismus (4) der Hebevorrichtung (100) angebracht ist, wobei der Verbindungsmechanismus (4) von dem ersten Drehpunkt (101) getrennt ist,
**dadurch gekennzeichnet, dass** die mindestens eine Hebevorrichtung (100) einen zweiten Arm (180) aufweist, der einen an einem fünften Drehpunkt (105) angelenkten ersten Endbereich (185) sowie einen zweiten Endbereich (184) aufweist, der an dem Verbindungsmechanismus (4) verschiebbar angebracht ist, wobei der fünfte Drehpunkt (105) der Hebevorrichtung (100) mit dem ersten Arm (170) einstückig ausgebildet ist und der fünfte Drehpunkt (105) von dem ersten Drehpunkt (101) getrennt ist, wobei der Verbindungsmechanismus (4) eine Führung (40) aufweist, an der der zweite Endbereich (184) des zweiten Arms (180) mittels eines vierten Drehpunkts (104) des zweiten Endbereichs (184) des zweiten Arms (180) verschiebbar angebracht ist.

3. Rasenmäher (1) nach Anspruch 2,
**dadurch gekennzeichnet, dass** die Führung (40) des Verbindungsmechanismus (4) mindestens einen Bereich aufweist, der entlang der Längsachse (L) angeordnet ist, wobei die Führung (40) mindestens eine Rückhalteaussparung (42) mit einer Größe zum Zusammenwirken mit dem vierten Drehpunkt (104) des zweiten Endbereichs (184) des zweiten Arms (180) der Hebevorrichtung (100) aufweist, wobei der vierte Drehpunkt (104) mit der mindestens einen Rückhalteaussparung (42) zusammenwirkt, um das Mähwerk (2) in der mindestens einen vom Boden (99) abgehobenen Position zu blockieren.

4. Rasenmäher (1) nach Anspruch 3,
**dadurch gekennzeichnet, dass** die Führung (40) des Verbindungsmechanismus (4) vollständig entlang der Längsachse (L) angeordnet ist.

5. Rasenmäher (1) nach Anspruch 3,
**dadurch gekennzeichnet, dass** die Führung (40) des Verbindungsmechanismus (4) in Form eines Kreisbogens ausgebildet ist und mindestens ein Teil des Kreisbogens entlang der Längsachse (L) angeordnet ist.

6. Rasenmäher (1) nach einem der Ansprüche 2 bis 5,
**dadurch gekennzeichnet, dass** der fünfte Drehpunkt (105) an einem zweiten Endbereich (175) des ersten Arms (170) angebracht ist, der zweite Endbereich (175) des ersten Arms (170) an dem ersten Endbereich (185) des zweiten Arms (180) angelenkt ist und an dem ersten Arm (170) mindestens ein dritter Arm (150) der Hebevorrichtung (100) in integraler Weise angebracht ist, wobei der dritte Arm (150) einen zweiten Bereich (151) aufweist, der sich in einer Distanz (D) in der gleichen Richtung wie der erste Arm (170) erstreckt, sowie einen ersten Bereich (155) aufweist, der den dritten Arm (150) mit dem ersten Arm (170) in integraler Weise verbindet, wobei an dem zweiten Bereich (151) des dritten Arms (150) der erste Drehpunkt (101) in integraler Weise angebracht ist, wobei der zweite Bereich (151) des dritten Arms (150) an dem Mähwerk (2) angelenkt ist.

7. Rasenmäher (1) nach Anspruch 6,
**dadurch gekennzeichnet, dass** der zweite Bereich (151) des dritten Arms (150) parallel zu der ersten Achse (S) ist und in einem dritten Winkel (γ) in Bezug auf den ersten Bereich (155) geneigt ist, wobei der dritte Winkel (γ) zwischen 0 und 90 Sexagesimalgrad liegt.

8. Rasenmäher (1) nach Anspruch 1,
**dadurch gekennzeichnet, dass** der erste Arm (170) eine Verlängerung (150) aufweist, wobei an der Verlängerung (150) des ersten Arms (170) ein dritter Arm (150) der Hebevorrichtung (100) in integraler Weise angebracht ist, wobei der dritte Arm (150) einen zweiten Bereich (151) aufweist, der sich in einer Distanz (D) in der gleichen Richtung wie der erste Arm (170) entlang einer ersten Achse (S) erstreckt, sowie einen ersten Bereich (155) aufweist, der den dritten Arm (150) mit dem ersten Arm (170) in integraler Weise verbindet, wobei an dem zweiten Bereich (151) des dritten Arms (150) der erste Drehpunkt (101) in integraler Weise angebracht ist und wobei der zweite Bereich (151) des dritten Arms (150) an dem Mähwerk (2) angelenkt ist.

9. Rasenmäher (1) nach Anspruch 8,
**dadurch gekennzeichnet, dass** der zweite Bereich (151) des dritten Arms (150) parallel zu der ersten Achse (S) ist und in einen dritten Winkel (γ) in Bezug auf den ersten Bereich (155) geneigt ist, wobei der dritte Winkel (γ) zwischen 0 und 90 Sexagesimalgrad liegt.

10. Rasenmäher (1) nach einem der vorhergehenden Ansprüche,
**dadurch gekennzeichnet, dass** eine Stange (130) in integraler Weise an dem ersten Arm (170) angebracht ist, wobei der Rahmen (3) einen unteren Bereich (35) aufweist, der eine zweite Achse (F) bezeichnet, wobei der untere Bereich (35) des Rahmens (3) entlang der zweiten Achse (F) in einem zweiten Winkel (β) in Bezug auf den Boden (99) geneigt ist, wobei der zweite Winkel (β) zwischen 10 und 80 Sexagesimalgrad liegt, wobei die Stange (130) in der mindestens einen vom Boden (99) abgehobenen Position des Mähwerks (2) an dem unteren Bereich (35) anliegt, wobei der untere Bereich (35) des Rahmens (3) ein erster Endanschlag für das Mähwerk (2) ist.

11. Rasenmäher (1) nach einem der vorhergehenden Ansprüche,
**dadurch gekennzeichnet, dass** das Mähwerk (2) einen vorderen Bereich (22), einen hinteren Bereich (25) und einen Masseschwerpunkt (21) zwischen dem vorderen Bereich (22) und dem hinteren Bereich (25) aufweist, wobei an dem Mähwerk (2) mindestens ein Abstützarm (120) der Hebevorrichtung (100) angebracht ist, wobei der mindestens eine Abstützarm (120) einen vorderen Endbereich (122), der durch ein Gelenk (102) mit dem vorderen Bereich (22) des Mähwerks (2) verbunden ist, einen hinteren Endbereich (125) mit einem zweiten Bereich (121), der an dem ersten Drehpunkt (101) angelenkt ist, sowie einen ersten Gegengewichtsbereich (129) an einem hinteren Endbereich des mindestens einen Abstützarms (120) aufweist.

12. Rasenmäher (1) nach Anspruch 11,
**dadurch gekennzeichnet, dass** der erste Gegengewichtsbereich (129) an einem oberen Bereich (153) des dritten Arms (150) anliegt, wobei der erste Gegengewichtsbereich (129) vorteilhafterweise ein Endanschlag für das Mähwerk (2) ist.

13. Rasenmäher (1) nach einem der Ansprüche 11 oder 12,
**dadurch gekennzeichnet, dass** an dem zweiten Bereich (121) ein Sicherheitsgriff (500) angebracht ist, der mittels einer Rückholfeder automatisch eingreift, die in integraler Weise mit dem ersten Arm (170) zusammenwirkt, wobei der Abstützarm (120) in der unteren Position des Mähwerks (2) die untere Position des Mähwerks (2) fest beibehält, wobei der Sicherheitsgriff (500) den ersten Arm (170) blockiert, indem er sich durch eine Verbindung (550) mit dem Abstützarm (120) hindurch erstreckt.

14. Rasenmäher (1) nach einem der Ansprüche 11 oder 12,
**dadurch gekennzeichnet, dass** an dem Abstützarm (120) ein Blockierhebel (600) angebracht ist, der mit einem Blockierstift (630) zusammenwirkt, der durch eine Verbindung (550) des ersten Arms (170) hindurchgeführt ist, wobei der erste Arm (170) in der unteren Position des Mähwerks (2) mit dem Abstützarm (120) integral verbunden ist und die untere Position des Mähwerks (2) fest beibehalten bleibt.

15. Rasenmäher (1) nach Anspruch 13,
**dadurch gekennzeichnet, dass** der erste Arm (170) eine weitere Verbindung (560) aufweist, wobei dann, wenn sich das Mähwerk (2) zur Wartung der Schneidmesser des Mähwerks (2) in der zweiten vom Boden (99) abgehobenen Position befindet, der Sicherheitsgriff (500) den Abstützarm (120) mit dem ersten Arm (170) blockiert.

16. Rasenmäher (1) nach Anspruch 14,
**dadurch gekennzeichnet, dass** der erste Arm (170) eine weitere Verbindung (560) aufweist, wobei dann, wenn sich das Mähwerk (2) in der zweiten vom Boden (99) abgehobenen Position zur Wartung der Schneidmesser des Mähwerks (2) befindet, der Blockierhebel (600) den Blockierstift (630) des Blockierhebels (600) durch die weitere Verbindung (560) hindurchführt, wobei der Blockierstift (630) des Blockierhebels (600) den Abstützarm (120) mit dem ersten Arm (170) blockiert.

17. Rasenmäher (1) nach einem der Ansprüche 2-7, 10-16,
**dadurch gekennzeichnet, dass** der erste Bereich (185) des zweiten Arms (180) der Hebevorrichtung (100) in einem vierten Winkel (δ) in Bezug auf eine fünfte Drehachse (C) geneigt ist, die durch den fünften Drehpunkt (105) definiert ist, wobei der vierte Winkel (δ) zwischen 10 und 80 Sexagesimalgrad liegt.

18. Rasenmäher (1) nach einem der Ansprüche 1 bis 17,
**dadurch gekennzeichnet, dass** der zweite Winkel (β) zwischen 10 und 80 Sexagesimalgrad liegt und dass der erste Winkel (α) zwischen 0 und 90 Sexagesimalgrad liegt.

19. Rasenmäher (1) nach einem der vorhergehenden Ansprüche,
**dadurch gekennzeichnet, dass** die Hebevorrichtung (100) einen Hebemechanismus (300) aufweist, der an dem Rahmen (3) angebracht ist, wobei der Hebemechanismus (300) mindestens ein Pedal (305), mindestens ein Seil (302) und mindestens eine Riemenscheibe (301) aufweist, die durch das mindestens eine Pedal (305) in Bewegung gesetzt wird, wobei die mindestens eine Riemenscheibe (301) das mindestens eine Seil (302) anhebt, wobei das mindestens eine Seil (302) mit dem Mähwerk (2) verbunden ist, um dieses in die mindestens eine vom Boden (99) abgehobene Position anzuheben.

20. Rasenmäher (1) nach einem der vorhergehenden Ansprüche,
**dadurch gekennzeichnet, dass** das Mähwerk (2) frontal an dem Rahmen (3) angebracht ist, dass der Rasenmäher (1) zwei Hebevorrichtungen (100) mit zwei ersten Armen (170) aufweist, die mittels zwei dritten Drehpunkten (103) an einer vorderen Achse (T) von zwei Vorderrädern (32) angelenkt sind, die an dem Rahmen (3) drehbar angebracht sind.

## Revendications

1. Tondeuse (1) comprenant un bâti (3), un châssis de coupe (2) et au moins un appareil de levage (100) disposé sur un côté de la tondeuse (1) et qui relie le châssis de coupe (2) avec le bâti (3), ledit appareil de levage (100) comprend un premier bras (170), ledit premier bras (170) comprend une première partie d'extrémité (173) qui est pivotée au moyen d'un troisième pivot (103) sur ledit bâti (3), ledit premier bras (170) est solidaire avec un premier pivot (101) qui fait pivoter ledit châssis de coupe (2), le premier pivot (101) de l'appareil de levage (100) est solidaire avec le châssis de coupe (2) et ledit appareil de levage (100) passe par ledit châssis de coupe (2) d'une position basse pour couper l'herbe à au moins une position levée du sol (99), ledit bâti (3) comprend une poulie d'entraînement (53) reliée à un moteur de la tondeuse (1) et ledit châssis de coupe (2) comprend une poulie entraînée (52) reliée au moyen d'au moins une courroie (51) à ladite poulie d'entraînement (53), ladite poulie d'entraînement (53) est montée, en rotation, avec le bâti (3) et ladite poulie entraînée (52) est montée, en rotation, avec le châssis de coupe (2), **caractérisée en ce qu'**une distance (PD) entre la poulie d'entraînement (53) et la poulie entraînée (52) mesurée le long de la courroie (51) modifie sa longueur selon une valeur comprise entre 0 % et 3 % pendant le passage du châssis de coupe (2) de la position basse à l'une quelconque de ladite au moins une position levée du sol (99), ledit appareil de levage (100) est approprié pour faire passer le châssis de coupe (2) de la position basse pour couper l'herbe dans laquelle une base inférieure (24) du châssis de coupe (2) est orientée vers le sol (99) avec un axe longitudinal (L) qui est parallèle à un plan géométrique (B) qui trace une base inférieure (24) du châssis de coupe (2) et un premier axe (S) qui s'étend le long dudit premier bras (170) qui sont parallèles au sol (99), à une première position levée du sol (99) de ladite au moins une position levée du sol (99) avec l'axe longitudinal (L) parallèle au premier axe (S) et les deux axes (L, S) levés du sol (99) par un deuxième angle (β), jusqu'à une seconde position levée du sol (99) de ladite au moins une position levée du sol (99), dans ladite seconde position levée du sol (99), une base inférieure (24) du châssis de coupe (2) est orientée vers la direction avant de la tondeuse (1), avec l'axe longitudinal (L) qui est incliné selon un premier angle (α) par rapport au premier axe (S), ladite seconde position levée du sol (99) est prévue pour l'entretien des lames de coupe du châssis de coupe (2), la distance (PD) entre la poulie d'entraînement (53) et la poulie entraînée (52) a une longueur comprise entre 0 % et 0,5 % pendant le passage du châssis de coupe (2) de la position basse à la première position levée du sol (99) et **en ce que** la distance (PD) entre la poulie d'entraînement (53) et la poulie entraînée (52) a une longueur comprise entre 0,5 % et 3 % pendant le passage du châssis de coupe (2) de la première position levée du sol (99) à la seconde position levée du sol (99) pour l'entretien des lames de coupe du châssis de coupe (2).

2. Tondeuse (1) selon la revendication 1, **caractérisée en ce que** ledit châssis de coupe (2) monte un mécanisme de liaison (4) dudit appareil de levage (100), ledit mécanisme de liaison (4) est séparé dudit premier pivot (101), **caractérisée en ce que** ledit au moins un appareil de levage (100) comprend un deuxième bras (180) comprenant une première partie d'extrémité (185) pivotée avec un cinquième pivot (105) et une seconde partie d'extrémité (184) qui est montée, de manière coulissante, avec le mécanisme de liaison (4), ledit cinquième pivot (105) de l'appareil de levage (100) est solidaire avec ledit premier bras (170) et ledit cinquième pivot (105) est séparé dudit premier pivot (101), ledit mécanisme de liaison (4) comprend un guide (40) qui monte, de manière coulissante, ladite seconde partie d'extrémité (184) dudit deuxième bras (180) au moyen d'un quatrième pivot (104) de ladite seconde partie d'extrémité (184) dudit deuxième bras (180).

3. Tondeuse (1) selon la revendication 2, **caractérisée en ce que** ledit guide (40) dudit mécanisme de liaison (4) comprend au moins une partie disposée le long de l'axe longitudinal (L), ledit guide (40) comprend au moins une encoche de retenue (42) qui a une taille pour mettre en prise ledit quatrième pivot (104) de ladite seconde partie d'extrémité (184) dudit deuxième bras (180) de l'appareil de levage (100), ledit quatrième pivot (104) met en prise ladite au moins une encoche de retenue (42) pour bloquer ledit châssis de coupe (2) dans ladite au moins une position levée du sol (99).

4. Tondeuse (1) selon la revendication 3, **caractérisée en ce que** ledit guide (40) dudit mécanisme de liaison (4) est complètement disposé le long de l'axe longitudinal (L).

5. Tondeuse (1) selon la revendication 3, **caractérisée en ce que** ledit guide (40) dudit mécanisme de liaison (4) se présente sous la forme d'un arc de circonférence et au moins une partie de l'arc de circonférence est disposée le long de l'axe longitudinal (L).

6. Tondeuse (1) selon l'une quelconque des revendications 2 à 5, **caractérisée en ce que** ledit cinquième pivot (105) est monté avec une seconde partie d'extrémité (175) dudit premier bras (170), ladite seconde partie d'extrémité (175) dudit premier bras (170) est pivotée avec ladite première partie d'extrémité (185) dudit deuxième bras (180), ledit premier bras (170) monte, de manière solidaire, au moins un troisième bras (150) de l'appareil de levage (100), ledit troisième bras (150) comprend une seconde partie (151) qui s'étend sur une distance (D) vers une même direction du premier bras (170) et une première partie (155) qui relie, de manière solidaire, le troisième bras (150) avec le premier bras (170), ladite seconde partie (151) du troisième bras (150) monte, de manière solidaire, ledit premier pivot (101), ladite seconde partie (151) dudit troisième bras (150) est pivotée avec ledit châssis de coupe (2).

7. Tondeuse (1) selon la revendication 6, **caractérisée en ce que** ladite seconde partie (151) du troisième bras (150) est parallèle au premier axe (S) et est inclinée selon un troisième angle (γ) par rapport à la première partie (155), ledit troisième angle (γ) est compris entre 0 et 90 degrés sexagésimaux.

8. Tondeuse (1) selon la revendication 1, **caractérisée en ce que** ledit premier bras (170) comprend un prolongement (150), ledit prolongement (150) du premier bras (170) monte, de manière solidaire, un troisième bras (150) de l'appareil de levage (100), ledit troisième bras (150) comprend une seconde partie (151) qui s'étend sur une distance (D) vers une même direction du premier bras (170) le long d'un premier axe (S) et une première partie (155) qui relie, de manière solidaire, le troisième bras (150) avec le premier bras (170), ladite seconde partie (151) du troisième bras (150) monte, de manière solidaire, ledit premier pivot (101), ladite seconde partie (151) dudit troisième bras (150) est pivotée avec ledit châssis de coupe (2).

9. Tondeuse (1) selon la revendication 8, **caractérisée en ce que** ladite seconde partie (151) du troisième bras (150) est parallèle au premier axe (S) et elle est inclinée selon un troisième angle (γ) par rapport à la première partie (155), ledit troisième angle (γ) est compris entre 0 et 90 degrés sexagésimaux.

10. Tondeuse (1) selon l'une quelconque des revendications précédentes, **caractérisée en ce qu'**une tige (130) est montée, de manière solidaire, avec ledit premier bras (170), ledit bâti (3) comprend une partie inférieure (35) qui identifie un second axe (F), ladite partie inférieure (35) du bâti (3) le long du second axe (F) est inclinée selon un deuxième angle (β) par rapport au sol (99), ledit deuxième angle (β) est compris entre 10 et 80 degrés sexagésimaux, ladite tige (130) est en butée avec ladite partie inférieure (35) dans ladite au moins une position levée du sol (99) dudit châssis de coupe (2), ladite partie inférieure (35) dudit bâti (3) est dans une première butée de fin de course pour le châssis de coupe (2).

11. Tondeuse (1) selon l'une quelconque des revendications précédentes, **caractérisée en ce que** ledit châssis de coupe (2) comprend une partie avant (22), une partie arrière (25) et un centre de masse (21) entre la partie avant (22) et la partie arrière (25), ledit châssis de coupe (2) monte au moins un bras de support (120) de l'appareil de levage (100), ledit au moins un bras de support (120) comprend une partie d'extrémité avant (122) reliée au moyen d'un joint (102) à la partie avant (22) du châssis de coupe (2), une partie d'extrémité arrière (125) comprenant une seconde partie (121) pivotée avec ledit premier pivot (101) et une première partie de contrepoids (129) au niveau d'une partie d'extrémité arrière dudit au moins un bras de support (120).

12. Tondeuse (1) selon la revendication 11, **caractérisée en ce que** ladite première partie de contrepoids (129) est en butée avec une partie supérieure (153) dudit troisième bras (150), ladite première partie de contrepoids (129) est avantageusement une butée de fin de course pour le châssis de coupe (2).

13. Tondeuse (1) selon l'une quelconque des revendications 11 ou 12, **caractérisée en ce que** la seconde partie (121) monte une poignée de sécurité (500) qui se met automatiquement en prise, au moyen d'un ressort de rappel qui met en prise, de manière solidaire, le premier bras (170) avec le bras de support (120) dans la position basse du châssis de coupe (2) maintenant la position basse du châssis de coupe (2) fixe, ladite poignée de sécurité (500) bloque le premier bras (170) passant par une liaison (550) avec le bras de support (120).

14. Tondeuse (1) selon l'une quelconque des revendications 11 ou 12, **caractérisée en ce que** le bras de support (120) monte un levier de blocage (600) qui met en prise une broche de blocage (630) passant par une liaison (550) du premier bras (170), le premier bras (170) étant solidaire avec le bras de support (120) dans la position basse du châssis de coupe (2), maintenant la position basse du châssis de coupe (2) fixe.

15. Tondeuse (1) selon la revendication 13, **caractérisée en ce que** le premier bras (170) comprend une autre liaison (560), lorsque ledit châssis de coupe (2) est dans la seconde position levée du sol (99) pour l'entretien des lames de coupe du châssis de coupe (2), la poignée de sécurité (500) bloque le bras de support (120) avec le premier bras (170).

16. Tondeuse (1) selon la revendication 14, **caractérisée en ce que** le premier bras (170) comprend une autre liaison (560), lorsque ledit châssis de coupe (2) est dans la seconde position levée du sol (99) pour l'entretien des lames de coupe du châssis de coupe (2), le levier de blocage (600) fait passer ladite broche de blocage (630) du levier de blocage (600) par ladite autre liaison (560), ladite broche de blocage (630) du levier de blocage (600) bloque le bras de support (120) avec le premier bras (170).

17. Tondeuse (1) selon l'une quelconque des revendications 2 à 7, 10 à 16, **caractérisée en ce que** ladite première partie (185) dudit second bras (180) de l'appareil de levage (100) est inclinée selon un quatrième angle (δ) par rapport à un cinquième axe de rotation (C) identifié par ledit cinquième pivot (105), ledit quatrième angle (δ) est compris entre 10 et 80 degrés sexagésimaux.

18. Tondeuse (1) selon l'une quelconque des revendications 1 à 17, **caractérisée en ce que** ledit deuxième angle (β) est compris entre 10 et 80 degrés sexagésimaux et **en ce que** ledit premier angle (α) est compris entre 0 et 90 degrés sexagésimaux.

19. Tondeuse (1) selon l'une quelconque des revendications précédentes, **caractérisée en ce que** l'appareil de levage (100) comprend un mécanisme de levage (300) qui est monté avec ledit bâti (3), ledit mécanisme de levage (300) comprend au moins une pédale (305), au moins une corde (302) et au moins une poulie (301) mise en mouvement par ladite au moins une pédale (305), ladite au moins une poulie (301) lève ladite au moins une corde (302), ladite au moins une corde (302) est reliée audit châssis de coupe (2) pour le soulever jusqu'à ladite au moins une position levée du sol (99).

20. Tondeuse (1) selon l'une quelconque des revendications précédentes, **caractérisée en ce que** ledit châssis de coupe (2) est monté, de manière frontale, avec le bâti (3), **en ce que** la tondeuse (1) comprend deux appareils de levage (100) avec deux premiers bras (170) qui sont pivotés au moyen de deux troisièmes pivots (103) par rapport à un axe avant (T) des deux roues avant (32) qui sont montées, en rotation, avec le bâti (3).
